# DEMANDE DE BREVET EUROPEEN

(11) **EP 3 973 755 A1**
(43) Date de publication de la demande: **30.03.2022**
(21) Numéro de dépôt: 21196762.5
(22) Date de dépôt: 15.09.2021
(51) Int. Cl.: A01B 3/46, A01B 63/24, A01B 63/32

(54) **CHARRUE SEMI-PORTÉE AVEC UN DISPOSITIF DE COMPENSATION DE L'EFFORT LATÉRAL GÉNÉRÉ PAR LADITE CHARRUE EN COURS D'UTILISATION**

(30) Priorité: 28.09.2020 FR 2009816
(71) Demandeur: Kuhn-Huard S.A.S, 44110 Chateaubriant (FR)
(72) Inventeur: LE CLEC'H, Ronan, 44390 NORT-SUR-ERDRE (FR); MOREL, Mickaël, 35470 BAIN DE BRETAGNE (FR)
(74) Mandataire: Cabinet Nuss

(57) **Abrégé**

L'invention concerne une charrue (1) semi-portée comprenant un bâti principal (2) en deux parties avec une partie de bâti avant (2') et une partie de bâti arrière (2"), les deux parties de bâti (2' et 2") portant des corps de labour (3) et étant assemblées entre elles au niveau d'un chariot porteur (4) pourvu d'un châssis (4'), le cas échéant par l'intermédiaire d'un bâti d'assemblage ou de liaison (5) monté sur ledit chariot (4). La partie de bâti arrière (2") est reliée par un dispositif de liaison (6) à l'une des autres composantes structurelles de la charrue (1) formées par le châssis (4') du chariot (4), le bâti d'assemblage (5) et la partie de bâti avant (2').

Cette charrue (1) est caractérisée en ce que le dispositif de liaison (6) est de type articulé et est configuré pour modifier l'orientation de la partie de bâti arrière (2") par rapport à la partie de bâti avant (2').

## Description

La présente invention concerne le domaine du machinisme agricole, plus particulièrement les équipements de travail du sol attelés à un tracteur en utilisation, et a pour objet une charrue semi-portée avec un dispositif de compensation de l'effort latéral généré par ladite charrue en cours d'utilisation.

Les charrues semi-portées visées par la présente invention sont du type comprenant essentiellement un bâti principal constitué de deux parties et relié par une structure articulée, intégrant éventuellement un timon, à un dispositif frontal d'attelage.

Dans une telle charrue, les parties de bâti (avant et arrière) portent des corps de labour et sont assemblées entre elles au niveau d'un chariot porteur pourvu d'un châssis, le cas échéant par l'intermédiaire d'un bâti d'assemblage monté sur ledit chariot. De plus, la partie de bâti arrière est reliée par un dispositif de liaison à l'une des autres composantes structurelles de la charrue formées par le châssis du chariot, le bâti d'assemblage et la partie de bâti avant.

Une telle charrue ameublit, émiette, enfouit et mélange. C'est un outil complexe par son mode d'action, par ses réglages et par de nombreux équipements qui influent sur le travail réalisé.

Or, une charrue semi-portée est libre derrière le tracteur qui la tracte et a tendance à dériver.

Ainsi, il est connu que pendant le labour, la largeur de travail évolue (la largeur réelle est différente de la largeur théorique) puisque la charrue réagit aux conditions de travail lorsqu'elles évoluent. Ces réactions se ressentent au niveau du tracteur et influent sur sa conduite et sa stabilité latérale par rapport à la ligne d'avancement.

Les efforts agissant lors du labour, sur les corps de labour individuels, disposés obliquement vers l'arrière entrainent un décalage entre la ligne de traction selon laquelle agit l'effort de traction exercée par le tracteur et le centre de l'essieu arrière de ce dernier, par lequel ladite ligne de traction devrait idéalement passée.

Cette distance de décalage produit un couple ou un bras de levier qui agit en particulier sur le tracteur du fait de l'effort de traction. Le chauffeur du tracteur compense l'effort résultant de ce couple (appelé effort latéral) par un braquage dirigé contre le bord du sillon en labour « sillon ». L'effort latéral altère la capacité à diriger le tracteur et exige un effort de traction plus important. Cela nécessite une attention accrue du chauffeur du tracteur et entraine une consommation de carburant plus élevée ainsi qu'une usure du tracteur et/ou de la charrue.

L'effort de traction varie en intensité et en position en fonction du nombre de corps de labour, de la largeur de coupe de la charrue et du sol (composition, humidité, compaction), et l'effort latéral évolue en fonction de l'effort de traction et de la distance de décalage.

L'influence de cet effort latéral est différente en labour « hors raie » puisque le tracteur évolue sur la partie du sol non labourée : ses quatre roues sont situées en dehors de la raie. Pour ce type de labour, la stabilité latérale du tracteur est assez délicate à maintenir du fait des variations de la position du centre de réaction des efforts de labour qui s'exercent sur la charrue par rapport au centre de traction du tracteur.

Dans le contexte précité, il existe par conséquent un problème récurrent de décalage de la ligne de traction par rapport au centre du tracteur, produisant de ce fait un effort latéral qui est néfaste pour un labour efficace, économique et aisé à réaliser pour le conducteur. En outre, la largeur effectivement labourée ne correspond pas à la largeur de travail théorique.

Pour tenter de résoudre ce problème dans le cas d'une charrue semi-portée, la charrue divulguée par le document WO-A-2016192712 propose, en vue de conserver un angle optimal de la charrue avec la direction d'avance, de bloquer la rotation autour de l'axe vertical d'articulation 9 du cardan du dispositif d'attelage (point de pivot entre tracteur et charrue) au moyen d'un accumulateur d'énergie 10. Ainsi, le fonctionnement d'une charrue portée est reproduit au travail. L'accumulateur d'énergie 10 est du type vérin à simple effet.

Outre la nécessité d'un surdimensionnement, adapté aux contraintes importantes subies, des parties concernées du dispositif d'attelage et du moyen de blocage mis en œuvre, le système de verrouillage connu de ce document WO présente également l'inconvénient de devoir être déverrouillé à chaque bout de champ pour que le tracteur et la charrue semi-portée puissent effectuer le demi-tour requis. En outre, cette solution est difficilement applicable dans le cas d'une charrue réversible.

Il a également été proposé dans le document EP 0 804 869, en relation avec une charrue réversible, de prévoir un dispositif de liaison à glissière entre la partie de bâti avant et la partie de bâti arrière, autorisant un décalage latéral par coulissement perpendiculaire à la direction d'avance entre ces deux parties. En outre, un moyen de réglage de la largeur de coupe des corps de labour peut être prévu.

En plus de nécessiter des moyens additionnels complexes et lourds, cette solution ne résout qu'imparfaitement le problème récurrent évoqué précédemment.

Enfin, dans la demande de brevet EP 3 698 612 - au nom de la demanderesse, il a été proposé de modifier ou de donner un angle de chasse à une roue d'appui pour compenser la dérive de la charrue lors du labour, permettant d'éviter les inconvénients précités.

La présente invention a pour but de proposer une solution alternative à cette dernière proposition de la demanderesse pour surmonter le problème récurrent précité, et ne présentant pas non plus les inconvénients majeurs des systèmes précités de l'état de la technique.

A cet effet, l'invention a pour objet une charrue semi-portée du type évoqué en introduction à la présente, laquelle est caractérisée en ce que le dispositif de liaison est de type articulé et est configuré pour modifier l'orientation de la partie de bâti arrière par rapport à la partie de bâti avant.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] représente une vue de dessus d'une charrue semi-portée avec un chariot et du type réversible, dans une position de travail, selon un premier mode de réalisation de l'invention ;
[Fig. 2] est une vue en élévation latérale de la charrue de la figure 1 en position de transport ;
[Fig. 3] est une vue partielle de dessus et à une autre échelle de la charrue de la figure 1, montrant une partie du chariot, du bâti d'assemblage et de la partie arrière, ainsi que le dispositif de liaison de cette charrue, laquelle est positionnée dans une de ses deux positions de travail ;
[Fig. 4] est une vue de dessus similaire à celle de la figure 1 montrant les effets du dispositif de compensation de la dérive de l'invention ;
[Fig. 5] est une vue partielle en perspective montrant une partie du chariot (roue de gauche enlevée) et du bâti d'assemblage faisant partie de la charrue de la figure 1, ainsi que le dispositif de liaison, dans une des positions de travail de ladite charrue ;
[Fig. 6] est une vue similaire à celle de la figure 3, illustrant un second mode de réalisation du dispositif de liaison de la charrue, et,
[Fig. 7] est une vue similaire à celle de la figure 3, illustrant un troisième mode de réalisation du dispositif de liaison de la charrue.

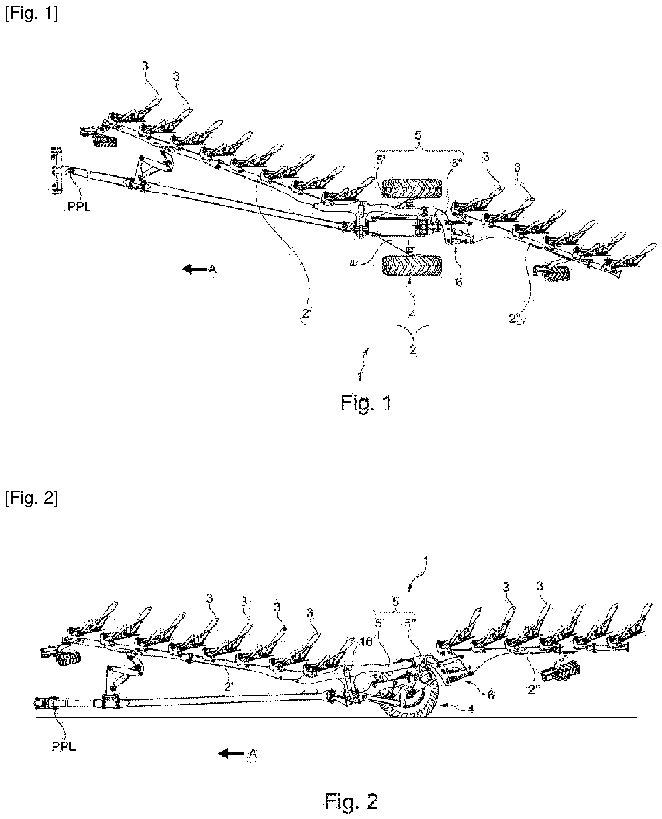

Les figures 1 et 2, et les autres figures de manière partielle, illustrent une charrue semi-portée comprenant un bâti principal (2) en plusieurs parties. La charrue (1) comprend un bâti principal (2) en deux parties articulées entre elles, c'est-à-dire avec une partie de bâti avant (2') et une partie de bâti arrière (2"). Ces deux parties de bâti (2' et 2") portent des corps de labour (3) et sont assemblées entre elles au niveau d'un chariot porteur (4) pourvu d'un châssis (4'). Cet assemblage est le cas échéant réalisé par l'intermédiaire d'un bâti d'assemblage ou de liaison (5) monté sur ledit chariot (4). La partie de bâti arrière (2") est reliée par un dispositif de liaison (6) à l'une des autres composantes structurelles de la charrue (1) parmi le châssis (4') du chariot (4), le bâti d'assemblage (5) et la partie de bâti avant (2').

La figure 1 illustre la charrue (1) réversible dans une de ses positions de travail. Telle que représentée, la roue gauche du chariot porteur (4) circule sur la surface du sol non labourée alors que la roue droite circule dans la raie de labour. Les corps de labour (3) sont orientés de façon à ce que leur contresep respectif soit parallèle à la direction d'avance (A). La partie de bâti avant (2') et la partie de bâti arrière (2") sont parallèles l'une par rapport à l'autre, en vue de dessus. La roue gauche du chariot (4) circule dans la raie de labour réalisé par le dernier corps de labour de la partie de bâti avant (2') ou, comme représenté ici, le corps de labour fixé sur la partie avant du bâti d'assemblage ou de liaison (5).

La figure 2 illustre la charrue (1) réversible dans sa position de transport. La roue gauche n'est pas représentée sur la figure 2 pour une meilleure visibilité autour de la partie avant fixe (7') et de la partie arrière basculante (7") du châssis support (7). On remarque que la partie avant (3') du bâti principal (3) est sensiblement inclinée par rapport à la surface du sol alors que la partie arrière (3") est sensiblement parallèle à la surface du sol.

Conformément à l'invention, le dispositif de liaison (6) est de type articulé et est configuré pour pouvoir modifier l'orientation de la partie de bâti arrière (2") par rapport à la partie de bâti avant (2'). Plus précisément, il s'agit de modifier l'angle de la partie de bâti arrière (2") par rapport à la partie de bâti avant (2') en vue de dessus, lorsque la charrue (1) est en position de travail.

Grâce à cette disposition de l'invention, il est possible de ramener aisément la totalité de la charrue semi-portée (1) à la largeur de travail théorique, en contrôlant le dévers de la partie arrière de la charrue (1) qui agit comme un gouvernail pour celle-ci. Avec le dispositif de liaison (6) selon l'invention, la partie de bâti arrière (2") peut être désalignée par rapport à la partie de bâti avant (2'). La position ou le réglage des corps de labour (3) sur la partie de bâti arrière (2") est maintenu. La partie de bâti arrière (2") est réalisée par exemple, comme représenté, par une poutre sur laquelle sont montés les différents corps de labour (3). Lors du labour (figure1), la partie de bâti arrière (2") ou la poutre est orientée par rapport à la direction d'avance (DA) alors que le contresep respectif des différents corps de labour (3) s'étend parallèlement à la direction d'avance (DA). En conditions de travail normal, lorsqu'il n'y a pas de décalage de la ligne de traction par rapport au centre du tracteur, l'angle d'orientation des parties de bâti avant et arrière (2', 2") par rapport à la direction d'avance (DA) est identique. Pour compenser la dérive lors du labour avec cette charrue (1), une modification de l'angle d'orientation de la partie de bâti arrière (2") est effectuée par le biais du dispositif de liaison (6). Pour le dispositif de liaison (6) selon les différents modes de réalisation de l'invention, la modification en longueur d'une, de deux ou de plusieurs bielles (7, 8, 9, 19) modifie l'orientation de la partie de bâti arrière (2"), ce qui permet de compenser la dérive due à l'effort latéral de la charrue (1) en fonction des conditions de travail. On comprend que la dérive est plus ou moins importante en fonction du nombre de corps de labour (3) et des conditions de travail. Ainsi la largeur de travail réelle de la charrue (1) correspond à la largeur théorique. La conduite du tracteur est plus facile puisque le dispositif de liaison (6) est configuré pour compenser l'effort latéral grâce à une adaptation de l'orientation de la partie de bâti arrière (2"). Lorsque l'effort latéral de la charrue (1) est compensé, la consommation de carburant du tracteur est réduite et l'usure des pièces travaillantes (pointes, socs, contreseps, versoirs) des corps de labour (3) est moins rapide.

D'une manière particulièrement avantageuse, la charrue (1) est équipée d'une électronique qui est configurée pour modifier l'orientation de la partie de bâti arrière (2") lorsque l'effort latéral de la charrue (1) doit être compensé. En pratique, l'électronique commande le dispositif de liaison (6) pour effectuer une modification de l'angle d'orientation de la partie de bâti arrière (2") par rapport à la direction d'avance (DA) ou par rapport à la partie de bâti avant (2'). Un tel réglage est réalisé dès que la largeur de travail réelle s'éloigne de la largeur théorique. La charrue (1) comporte ainsi, pour détecter ce phénomène, des moyens de surveillance tels que des capteurs ou similaires.

L'avantage notable résultant de la solution proposée par l'invention, à savoir agir sur l'orientation de la partie arrière de la charrue (1), réside dans le fait que le bras de levier entre ladite partie arrière et le point de pivot libre (PPL) entre le tracteur et la charrue (1) est important, l'«effort de dérive » à fournir est donc limité. L'angle d'orientation nécessaire pour effectuer la correction demeure en outre faible, ce qui limite l'usure de la partie arrière, notamment des corps de labour (3) qui y sont montés.

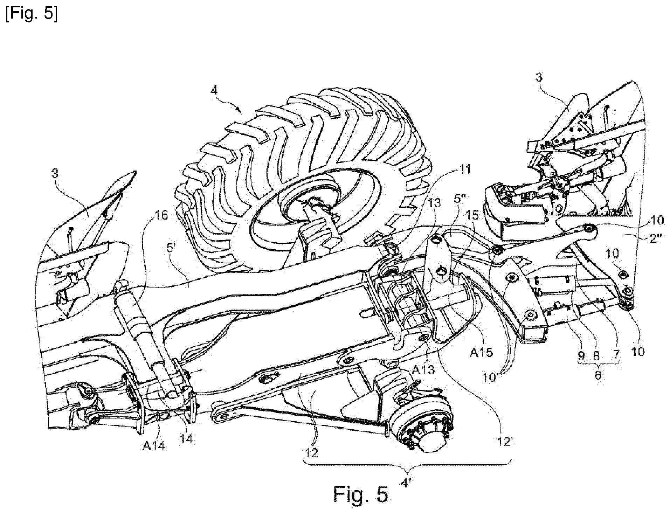

En accord avec un premier mode préféré de réalisation de l'invention, le l'invention, illustré à titre d'exemple sur les figures 1 à 5, le dispositif de liaison (6) comprend au moins deux éléments de liaison (7, 8, 9) séparés et distincts, reliant chacun la partie de bâti arrière (2") à l'une desdites autres composantes structurelles (4', 5, 2') précitées de la charrue (1), ce de manière articulée.

Ce mode de réalisation autorise une grande diversité constructive et fonctionnelle pour le dispositif de liaison (6) et en répartissant les contraintes sur plusieurs éléments, de limiter le dimensionnement de chacun d'eux.

Dans le cadre de ce premier mode de réalisation, il est avantageusement prévu que les différents éléments de liaison (7, 8, 9) du dispositif de liaison (6) établissent chacun une liaison rigide, éventuellement réglable en longueur, entre deux points d'ancrage propres (10 et 10'), dont un premier (10) est localisé sur la partie de bâti arrière (2") et un second (10') sur l'une des autres composantes structurelles (4', 5, 2') précitées de la charrue (1). Comme le montrent aussi les figures 1 à 5 à titre d'exemple, les éléments de liaison (7, 8, 9) sont reliés au niveau de chaque point d'ancrage (10, 10') de manière articulée et tous les points d'ancrage (10, 10') sont situés dans un même plan ou dans au moins deux plans parallèles entre eux.

Avantageusement, le dispositif de liaison (6) comprend au moins deux éléments de liaison sous forme de bielles (7, 8, 9), dont l'une au moins est réglable en longueur, chacune desdites bielles (7, 8, 9) étant reliée à la partie de bâti arrière (2") et à l'une des autres composantes structurelles (4', 5, 2') de la charrue (1) par des paliers pivots respectifs au niveau de deux points d'ancrage (10, 10') opposés, les axes de rotation des différents paliers pivots étant tous parallèles entre eux. Les éléments de liaison sont par exemple un organe espaceur à réglage manuel, tel qu'un tirant, ou une entretoise télescopique ou à réglage en longueur par commande hydraulique ou électrique, tel qu'un vérin.

Préférentiellement, et comme cela ressort des figures 1 à 5, le dispositif de liaison (6) comprend trois bielles (7, 8 et 9), à savoir une bielle principale (7) assurant l'essentiel de la traction de la partie de bâti arrière (2") en phase de travail de la charrue (1) et une première et une seconde bielles auxiliaires (8 et 9) participant au réglage de l'orientation de la partie de bâti arrière (2") par rapport à la partie de bâti avant (2'). Ainsi, les première et seconde bielles auxiliaires (8 et 9), de type plus complexe compte tenu de leur fonction principale de réglage et de maintien de l'orientation, peuvent être sous-dimensionnées en termes de robustesse par rapport à la bielle principale (7).

Une unique bielle auxiliaire réglable en longueur peut être prévue, mais avantageusement les première et seconde bielles auxiliaires (8 et 9) sont toutes deux réglables en longueur, ces bielles auxiliaires consistant le cas échéant chacune par exemple en un tirant ou en un vérin (pour un réglage manuel ou commandé).

L'actionnement de la ou de l'une au moins des bielle(s) réglable(s) permet d'agir sur l'orientation de la partie de bâti arrière (2"), et donc sur l'orientation de la partie arrière de la charrue (1) située au-delà du chariot (4) à l'opposé de la direction d'avance (A) et agissant comme un gouvernail. Par ce biais, une rectification contrôlée de la dérive du chariot (4) est possible.

Selon une caractéristique constructive avantageuse de l'invention, la bielle principale (7) et la seconde bielle auxiliaire (9) sont disposées et arrangées mutuellement de telle manière que leurs axes longitudinaux, ou les axes desdites bielles (7 et 9) reliant leur deux extrémités opposées articulées, convergent en un point de convergence virtuel, la première bielle auxiliaire (8) étant disposée entre la bielle principale (7) et la seconde bielle auxiliaire (9).

Ces axes longitudinaux convergent alors en un point de convergence virtuel qui est situé au-delà de leurs points d'ancrage (10) sur la partie de bâti arrière (2"), à l'opposé de la direction d'avance (DA) au travail de la charrue (1), comme illustré sur les figures 1 à 5. Avec un point de convergence virtuel situé derrière les points d'ancrage (10), la partie de bâti arrière (2") est plus stable. Dans une alternative non représentée, un point de convergence virtuel peut être situé au-delà des points d'ancrage (10') des bielles auxiliaires (8, 9) sur l'une des autres composantes structurelles (4', 5, 2') précitées de la charrue (1), dans la direction d'avance (DA) au travail de la charrue (1).

Préférentiellement, les points d'ancrage (10') sont tous situés sur la partie arrière (5") du bâti d'assemblage ou de liaison (5), lequel est aussi soumis à l'action d'un moyen de retournement (16) dans le cas d'une charrue (1) réversible.

Conformément à une construction pratique préférée du premier mode de réalisation de l'invention, illustrée sur les figures 1 à 5, ce sont trois bielles (7, 8, 9) qui forment le dispositif de liaison (6) et elles sont configurées et arrangées de telle manière qu'une modification de la longueur de la seconde bielle auxiliaire (9) entraine une modification du dévers de la partie arrière de la charrue (1) correspondant à la partie de bâti arrière (2") équipée des corps de labour (3).

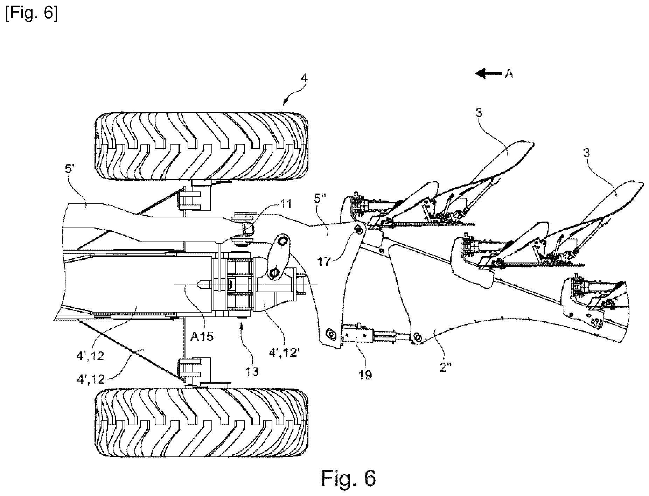

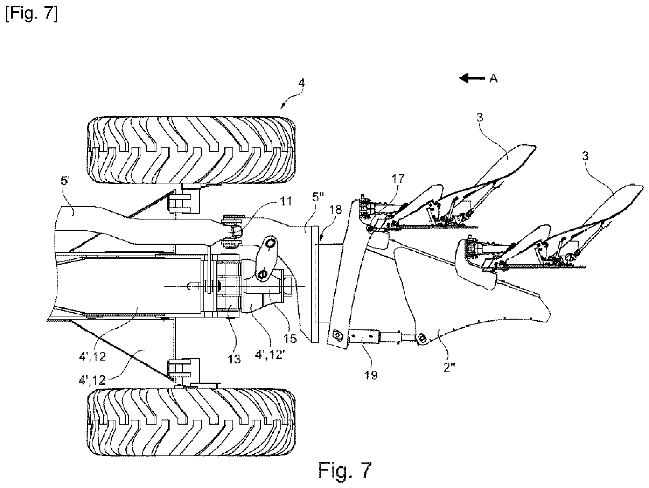

Les figures 6 et 7 illustrent des deuxième et troisième modes de réalisation de l'invention, notamment du dispositif de liaison (6) reliant de manière articulée la partie de bâti arrière (2") à l'une des autres composantes structurelles de la charrue (1) formées par le châssis (4') du chariot (4), le bâti d'assemblage (5) et la partie de bâti avant (2'), préférentiellement la partie arrière (5") dudit bâti d'assemblage (5).

En accord avec ces deux modes de réalisation alternatifs, le dispositif de liaison (6) comprend une liaison pivot (17), seule (figure 6) ou combinée avec une liaison glissière (18) (figure 7). D'une manière avantageuse, la liaison pivot (17) est située dans le voisinage de l'extrémité avant de la partie de bâti arrière (2"), de préférence proche d'une droite passant par les pointes de soc de la première paire de corps de labour (3) fixée sur la partie de bâti arrière (2"). La liaison pivot (17) s'étend derrière le châssis porteur (4).

Dans les deux modes précités, un moyen (19) de réglage du basculement de la partie de bâti arrière (2") autour de la liaison pivot (17) est prévu (actionneur ou tirant) et dans le troisième mode de réalisation également un moyen (non représenté) de réglage du déport latéral de ladite partie de bâti arrière (2") par rapport au chariot (4) ou à la partie avant de la charrue (1), agissant sur la liaison glissière (18).

Dans le cadre d'une application préférée de l'invention, la charrue (1) consiste en une charrue réversible.

Cette charrue (1) réversible présente avantageusement les caractéristiques suivantes :
- les parties de bâti avant (2') et arrière (2") sont respectivement solidaires de parties avant (5') et arrière (5") d'un bâti d'assemblage ou de liaison (5), ces deux parties de bâti (5' et 5") étant reliées entre elles par une liaison articulée (11) connectant ainsi mutuellement les deux parties de bâti (2' et 2") par leur intermédiaire ;
- le châssis support (4') du chariot (4) présente une partie avant fixe (12), solidaire du chariot (2), et une partie arrière basculante (12'), reliée à la partie avant fixe (12) par un palier d'assemblage pivotant (13) avec un axe (A13) perpendiculaire à la direction d'avance (DA) de la charrue (1) au travail ;
- la partie avant (5') de bâti d'assemblage (5) est reliée à la partie avant fixe (12) du châssis support (4') par un palier d'articulation pivotante avant (14) d'axe (A14) parallèle à la direction d'avance (DA), et la partie arrière (5") de bâti d'assemblage (5) est reliée à la partie arrière basculante (12') du châssis support (4') par un palier d'articulation pivotante arrière (15) d'axe (A15) situé dans un plan contenant la direction d'avance (DA), les paliers d'articulation pivotante avant et arrière (14 et 15) formant des paliers de guidage du retournement respectivement des parties de bâti avant et arrière (2' et 2").

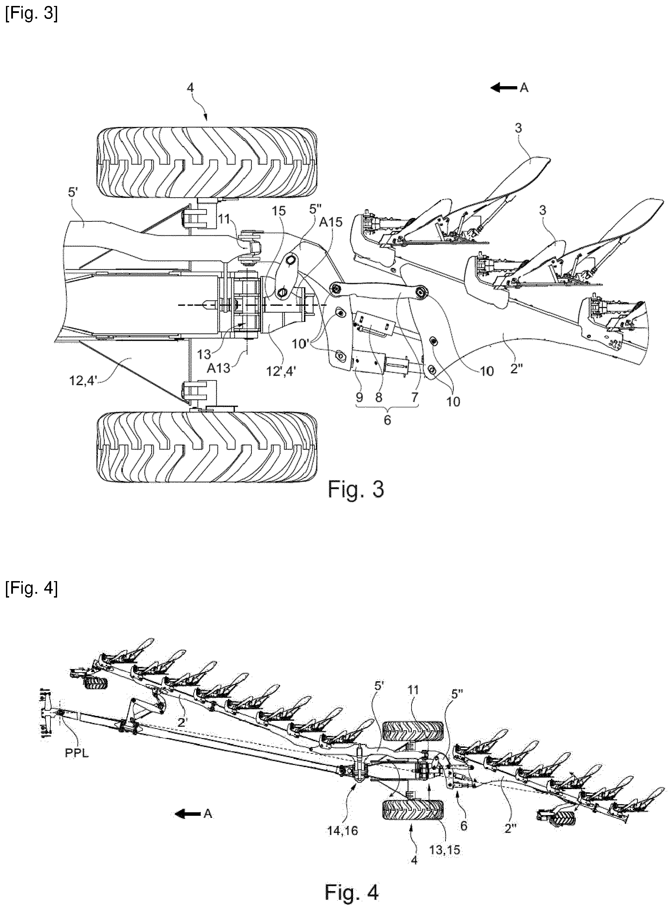

Tel que représenté sur la figure 3, le dispositif de liaison (6) selon le premier exemple de réalisation s'étend à l'arrière de la liaison articulée (11). Le dispositif de liaison (6) s'étend derrière l'axe (A13) du palier d'assemblage pivotant (13) compte tenu de la direction d'avance (DA). D'une manière avantageuse, la bielle principale (7) et les bielles auxiliaires (8, 9) sont positionnées lors du travail de part et d'autre de l'axe (A13) du palier d'assemblage pivotant (13). Les points d'ancrage (10') des trois bielles (7, 8, 9) sont avantageusement alignés. Le point d'ancrage (10') de la bielle principale (7) s'étend d'un côté de l'axe (A14, A15) du palier d'articulation pivotant avant ou arrière (14, 15). Le point d'ancrage (10') de la bielle auxiliaire (8) s'étend de l'autre côté de l'axe (A14, A15) du palier d'articulation pivotant avant ou arrière (14, 15).

Une charrue réversible de ce type est décrite dans la demande de brevet français n° FR 2009812, déposée ce jour au nom de la demanderesse.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Charrue (1) semi-portée comprenant un bâti principal (2) en deux parties avec une partie de bâti avant (2') et une partie de bâti arrière (2"), les deux parties de bâti (2' et 2") portant des corps de labour (3) et étant assemblées entre elles au niveau d'un chariot porteur (4) pourvu d'un châssis (4'), le cas échéant par l'intermédiaire d'un bâti d'assemblage ou de liaison (5) monté sur ledit chariot (4), la partie de bâti arrière (2") étant reliée par un dispositif de liaison (6) à l'une des autres composantes structurelles de la charrue (1) formées par le châssis (4') du chariot (4), le bâti d'assemblage (5) et la partie de bâti avant (2'),
charrue (1) **caractérisée en ce que** le dispositif de liaison (6) est de type articulé et est configuré pour modifier l'orientation de la partie de bâti arrière (2") par rapport à la partie de bâti avant (2').

2. Charrue selon la revendication 1, **caractérisée en ce que** le dispositif de liaison (6) comprend au moins deux éléments de liaison (7, 8, 9) séparés et distincts, reliant chacun la partie de bâti arrière (2") à l'une desdites autres composantes structurelles (4', 5, 2') de la charrue (1) de manière articulée.

3. Charrue selon la revendication 1 ou 2, **caractérisée en ce que** les éléments de liaison (7, 8, 9) du dispositif de liaison (6) établissent chacun une liaison rigide, éventuellement réglable en longueur, entre deux points d'ancrage propres (10 et 10'), dont un premier (10) est localisé sur la partie de bâti arrière (2") et un second (10') sur l'une des autres composantes structurelles (4', 5, 2') de la charrue (1), ces éléments de liaison (7, 8, 9) étant reliés au niveau de chaque point d'ancrage (10, 10') de manière articulée et tous les points d'ancrage (10, 10') étant situés dans un même plan ou dans au moins deux plans parallèles entre eux.

4. Charrue selon l'une quelconque des revendications 1 à 3, **caractérisée en ce que** le dispositif de liaison (6) comprend au moins deux éléments de liaison sous forme de bielles (7, 8, 9), dont l'une au moins est réglable en longueur, chacune desdites bielles (7, 8, 9) étant reliée à la partie de bâti arrière (2") et à l'une des autres composantes structurelles (4', 5, 2') de la charrue (1) par des paliers pivots respectifs au niveau de deux points d'ancrage (10, 10') opposés, les axes de rotation des différents paliers pivots étant tous parallèles entre eux.

5. Charrue selon l'une quelconque des revendications 1 à 4, **caractérisée en ce que** le dispositif de liaison (6) comprend trois bielles (7, 8 et 9), à savoir une bielle principale (7) assurant l'essentiel de la traction de la partie de bâti arrière (2") en phase de travail de la charrue (1) et une première et une seconde bielles auxiliaires (8 et 9) participant au réglage de l'orientation de la partie de bâti arrière (2") par rapport à la partie de bâti avant (2').

6. Charrue selon la revendication 5, **caractérisée en ce que** la bielle principale (7) et la seconde bielle auxiliaire (9) sont disposées et arrangées mutuellement de telle manière que leurs axes longitudinaux, ou les axes desdites bielles (7 et 9) reliant leur deux extrémités opposées articulées, convergent en un point de convergence virtuel, la première bielle auxiliaire (8) étant disposée entre la bielle principale (7) et la seconde bielle auxiliaire (9).

7. Charrue selon la revendication 5 ou 6, **caractérisée en ce que** les première et seconde bielles auxiliaires (8 et 9) sont toutes deux réglables en longueur, ces bielles auxiliaires consistant le cas échéant chacune par exemple en un tirant ou en un vérin.

8. Charrue selon l'une quelconque des revendications 5 à 7 **caractérisée en ce que** les trois bielles (7, 8, 9) formant le dispositif de liaison (6) sont configurées et arrangées de telle manière qu'une modification de la longueur de la seconde bielle auxiliaire (9) entraine une modification du dévers de la partie arrière de la charrue (1) correspondant à la partie de bâti arrière (2") équipée des corps de labour (3).

9. Charrue selon la revendication 1, **caractérisée en ce que** le dispositif de liaison (6) comprend une liaison pivot, seule ou combinée avec une liaison glissière.

10. Charrue selon l'une quelconque des revendications 1 à 9, **caractérisée en ce qu'**elle consiste en une charrue réversible, **en ce que** les parties de bâti avant (2') et arrière (2") sont respectivement solidaires de parties avant (5') et arrière (5") d'un bâti d'assemblage ou de liaison (5), ces deux parties de bâti (5' et 5") étant reliées entre elles par une liaison articulée (11) connectant ainsi mutuellement les deux parties de bâti (2' et 2") par leur intermédiaire, **en ce que** le châssis support (4') du chariot (4) présente une partie avant fixe (12), solidaire du chariot (2), et une partie arrière basculante (12'), reliée à la partie avant fixe (12) par un palier d'assemblage pivotant (13) avec un axe (A13) perpendiculaire à la direction d'avance (DA) de la charrue (1) au travail, et **en ce que** la partie avant (5') de bâti d'assemblage (5) est reliée à la partie avant fixe (12) du châssis support (4') par un palier d'articulation pivotante avant (14) d'axe (A14) parallèle à la direction d'avance (DA), et la partie arrière (5") de bâti d'assemblage (5) est reliée à la partie arrière basculante (12') du châssis support (4') par un palier d'articulation pivotante arrière (15) d'axe (A15) situé dans un plan contenant la direction d'avance (DA), les paliers d'articulation pivotante avant et arrière (14 et 15) formant des paliers de guidage du retournement respectivement des parties de bâti avant et arrière (2' et 2").
